Europäisches Patentamt

European Patent Office

Office européen des brevets

(19)

(11) Veröffentlichungsnummer : **0 409 859 B1**

(12) **EUROPÄISCHE PATENTSCHRIFT**

(45) Veröffentlichungstag der Patentschrift :
**05.08.92 Patentblatt 92/32**

(51) Int. Cl.$^5$ : **F02B 3/04,** F02D 17/02, F02B 17/00

(21) Anmeldenummer : **89904044.8**

(22) Anmeldetag : **05.04.89**

(86) Internationale Anmeldenummer :
**PCT/EP89/00366**

(87) Internationale Veröffentlichungsnummer :
**WO 89/09872 19.10.89 Gazette 89/25**

(54) **VERFAHREN ZUM BETREIBEN EINES ZWEITAKT-VERBRENNUNGSMOTORS.**

(30) Priorität : **06.04.88 DE 3811553**

(43) Veröffentlichungstag der Anmeldung :
**30.01.91 Patentblatt 91/05**

(45) Bekanntmachung des Hinweises auf die Patenterteilung :
**05.08.92 Patentblatt 92/32**

(84) Benannte Vertragsstaaten :
**AT DE FR GB IT SE**

(56) Entgegenhaltungen :
**DE-C- 913 835**
**US-A- 2 018 426**

(56) Entgegenhaltungen :
**Kraftfahrzeugtechnik, Bans 35, Nr. 7, 1985, VEB Verlag Technik (Berlin, DE), G.Engler et al.: "Konzept einerKraftstoffeinspritzanlage für Motorräder mit Zweitakt-Ottomotoren", Seiten 201-203, siehe Seite 201, linke Spalte. Absatz 3; Seite203, linke Spalte, Absatz 3; Figur 1**

(73) Patentinhaber : **Ficht GmbH**
**Spannleitenberg 1**
**W-8011 Kirchseeon (DE)**

(72) Erfinder : **BAUMÜLLER, Andreas**
**Mohrstrasse 3**
**W-8000 München 45 (DE)**

(74) Vertreter : **Lehmann, Klaus, Dipl.-Ing. et al Schroeter, Fleuchaus, Lehmann, Wehser, Holzer & Gallo Patentanwälte Wolfratshauser Strasse 145**
**W-8000 München 71 (DE)**

EP 0 409 859 B1

EP 0 409 859 B1

## Beschreibung

Die Erfindung betrifft ein Verfahren zum Betreiben eines Zweitakt-Verbrennungsmotors mit einer elektronisch gesteuerten direkten Kraftstoffeinspritzung in den Zylinder, wobei die Kraftstoffeinspritzung im Leerlauf und im niedrigen Teillastbereich intermittierend erfolgt.

Für Zweitakt-Ottomotoren ist es bekannt, daß durch eine Gemischbildung innerhalb des Zylinders, d. h. durch eine Kraftstoffeinspritzung nach dem Schließen der Abgaskanäle, die Verbrauchswerte und die HC-Anteile im Abgas wesentlich verbessert werden können. Durch eine solche Direkteinspritzung des Kraftstoffes kann im Innern des Zylinders eine Ladungsschichtung erreicht werden, indem nämlich der Kraftstoff durch die Einspritzdüse in definierte Bereiche des Zylinders eingespritzt wird und sich damit im Moment der Zündung im Bereich der Zündkerze befindet. Es hat sich jedoch gezeigt, daß sich im unteren Teillastbereich, im Schubbetrieb sowie im Leerlauf nach wie vor Zündunregelmäßigkeiten einstellen, die wohl bei diesem Betrieb vom hohen Altgasanteil im Zylinder herrühren. Als Ursache dafür wird angenommen, daß der Kraftstoff wohl in den richtigen Bereich eingespritzt wird, daß er sich aber bis zum Zeitpunkt der Zündung innerhalb der großen Altgasmenge nicht genügend mit der im Teillast-, Schub- und Leerlaufbetrieb wegen der geschlossenen Drosselklappe in verhältnismäßig geringen Mengen eingespülten Frischluft zu einem zündfähigen Gemisch vermengt. Erst nach mehreren Gaswechselvorgängen ist das Altgas so weit durch Frischluft verdrängt, daß der eingespritzte Kraftstoff verbrennen kann.

In der DE-PS 913 835 wird dieses Phänomen des nicht mehr regelmäßigen Zündens erläutert und angenommen, daß die Zylinder des Zweitakt-Ottomotors mit einem zu mageren Gemisch gespeist werden und daraus die Zündschwierigkeiten entstehen. Zur Beseitigung dieser Schwierigkeiten wird vorgeschlagen, beim Übergang vom Vollastbetrieb auf Teillastbetrieb von einer Steuerung mit abnehmendem Gasdruck bei konstanter Öffnungszeit der Einspritzventile auf eine Steuerung mit erhöhtem konstanten Gasdruck bei verringerten Öffnungszeiten der Einspritzventile überzugehen. Dabei erfolgt die Kraftstoffzufuhr zu den Zylindern intermittierend, und zwar nur bei jeder zweiten, dritten, vierten oder fünften Umdrehung. Durch diese intermittierende Kraftstoffeinbringung wird wohl die Zündfähigkeit des Gemisches durch die zweifach wiederholte Frischlufteinspülung zwischen den Einspritzintervallen verbessert. Diese Verbesserungen durch den intermittierenden Betrieb werden nur durch einen verhältnismäßig großen Aufwand möglich, da nämlich zwei Steuerpumpen benötigt werden, wovon eine mit einer Schrägkantensteuerung versehen ist. Die dargestellte Ausführung läßt nur ein Einspritzen bei jeder zweiten Umdrehung zu; - es ist zu bezweifeln, daß damit bereits eine zuverlässige Zündung erreicht werden kann.

Durch die Zeitschrift "Kraftfahrzeugtechnik", Berlin 35 (1985), Heft 7, Seiten 201 - 203, ist ebenfalls ein Zweitakt-Ottomotor bekannt mit im Teillastbetrieb intermittierender Einspritzung. Mit Hilfe einer Steuerelektronik wird sowohl die Kraftstoffmenge als auch der Zeitpunkt ermittelt, zu dem diese Kraftstoffmenge in den Zylinder eingespritzt wird. Dazu findet ein spezielles Pumpen-Düsen-System Verwendung. Dadurch sollen Verbrauch und Abgaswerte verbessert werden.

Der Erfindung liegt daher die Aufgabe zugrunde, einen Zweitakt-Verbrennungsmotor zu schaffen, bei dem - insbesondere im Teillastbereich sowie im Leerlauf und Schubbetrieb - gute Rundlaufeigenschaften und ein geringer Teillastverbrauch gewährleistet sowie erhöhte Anforderungen an geringe Abgaswerte sicher erreichbar sind.

Die erfindungsgemäße Lösung dieser Aufgabe ergibt sich aus den Patentansprüchen.

Durch die Maßnahmen der Erfindung wird in vorteilhafter Weise erreicht, daß durch das Öffnen der Drosselklappe über die im Leer- bzw. Teillastzustand übliche Stellung hinaus eine größere Frischluftmenge eingespült wird, die das Zünden von geringsten, im intermittierenden Betrieb eingespritzten Kraftstoffmengen sicherstellt, wodurch eine magere Verbrennung mit einem einwandfreien Rundlauf gewährleistet wird, da die Zündbedingungen für eine erfolgte Einspritzung schon nach relativ wenigen, einspritzlosen Umdrehungen sichergestellt sind. Da die Einspritzung bei gleichbleibendem Öffnungswinkel mit konstantem Volumenstrom erfolgt, wird im Leerlaufbetrieb ein Wegdriften der Drehzahl ausgeglichen, da einer Veränderung der Drehzahl automatisch eine entgegengesetzte Veränderung des eingespritzten Kraftstoffvolumens zugeordnet ist. Ferner werden Zündaussetzer aufgrund falscher Schichtung des Gemisches im Zylinder sicher vermieden.

Es ist auch vorgesehen, daß die Drosselklappe im Leerlauf- bzw. Teillastzustand ganz geöffnet wird, um eine Ladungsschichtung zu erreichen, die im Moment der Zündung das zündfähige Gemisch in Kerzennähe bringt und je nach Lastzustand mehr oder weniger Anteile der reinen Frischluft in kerzenfernen Bereichen hält. Trotz der vollen Öffnung der Drosselklappe ist eine Drehzahlregelung im Leerlaufbetrieb nicht erforderlich, da sich durch die Einspritzung des Kraftstoffes mit konstantem Volumenstrom während eines gleichbleibenden Öffnungswinkels ein Wegdriften der Drehzahl automatisch ausregelt.

Um jedoch auch im Unterlastbereich eine Leistungsregelung möglich zu machen, ist ferner vorgesehen, daß zur Einstellung eines gewünschten Gemischverhältnisses der Öffnungswinkel bzw. der Einspritzwinkel

2

verändert wird.

Um die Einspritzung mit einem konstanten Volumenstrom in allen Betriebszuständen abzusichern, sieht das erfindungsgemäße Verfahren vor, daß der Kraftstoff mit einem Druck von etwa 30 bar oder mehr direkt in den Zylinderkopf eingespritzt wird. Durch diesen erhöhten Einspritzdruck wird die Zerstäubung verbessert, und damit die Gemischbildung in kürzerer Zeit ermöglicht.

Vorzugsweise liegt die jeweilige Einspritzdauer in der Größenordnung von etwa 1 ms. Eine solche Steuerung läßt sich sehr genau verwirklichen, da genau arbeitende Einspritzdüsen als Stand der Technik zur Verfügung stehen, und die Verstellung der Öffnungswinkel mit Hilfe von auf der Kurbelwelle angeordneten Winkelgebern leicht vorzunehmen ist.

Bei Mehrzylinder-Zweitaktmotoren kann die Kraftstoffeinspritzung für die einzelnen Zylinder sequentiell und periodisch in gleichen Zeitabständen erfolgen, so daß man alle Zylinder der Reihe nach abschaltet oder zünden lassen kann. Bei einem Vierzylinder-Sternmotor mit einem Zylinderwinkel von 90° und einem Zündabstand von 90° (Zylinderfolge 1, 2, 3, 4) kann man beispielsweise die Einspritzreihenfolge entgegen der Zündfolge umlaufen lassen. Ausgehend von dem Zylinder 1 wird also nach einer 3/4 Motorumdrehung nur in den Zylinder 4, nach 1 1/2 Umdrehungen in den Zylinder 3, nach 2 1/4 Umdrehungen in den Zylinder 2 und nach 3 Umdrehungen wieder in den Zylinder 1 eingespritzt. Hierbei wird der Kraftstoff nur bei jeder dritten Umdrehung der Reihe nach in einen der vier Zylinder eingespritzt. Dadurch ergibt sich eine regelmäßige Zündfolge in gleichen Zeitabständen und ein gleichmäßiger Rundlauf.

Die Erfindung mit ihren Vorteilen und Merkmalen ergibt sich auch aus der nachfolgenden Beschreibung eines Ausführungsbeispiels in Verbindung mit den Ansprüchen und der Zeichnung. Es zeigen:

Fig. 1 ein Diagramm für eine normale und intermittierende Direkteinspritzung am Zweitaktmotor;

Fig. 2 eine schematische Darstellung einer Schaltung zur Durchführung des Verfahrens gemäß der Erfindung.

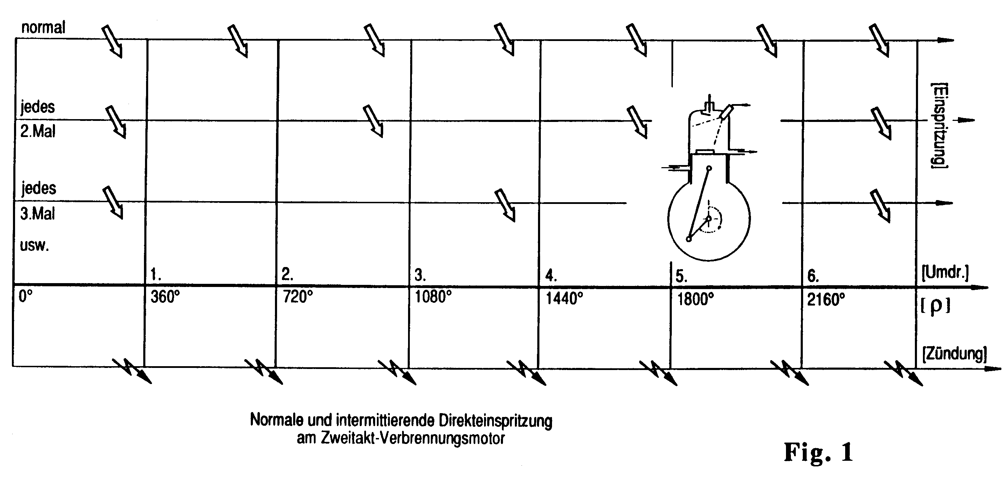

Im Diagramm gemäß Fig. 1 sind im unteren Teil die bei jeder Umdrehung des Motors bzw. bei den entsprechenden Drehwinkelstellungen ($\rho$) erfolgenden Zündvorgänge der Zündkerze veranschaulicht. Im oberen Teil des Diagramms sind die Einspritzvorgänge angedeutet, wobei in der ersten Zeile die normale Einspritzung vor jeder Zündung, d. h. bei jeder Motorumdrehung dargestellt ist.

In der zweiten und dritten Zeile des Diagramms sind periodisch unterbrochene Einspritzvorgänge veranschaulicht. Bei dem in der zweiten Zeile dargestellten Ablauf der Einspritzung erfolgt eine periodisch intermittierende Kraftstoffeinspritzung nur bei jeder zweiten Motorumdrehung. Bei dem in der dritten Zeile veranschaulichten Beispiel erfolgt eine periodisch intermittierende Kraftstoffeinspritzung nur bei jeder dritten Motorumdrehung. In entsprechender Weise könnte eine Kraftstoffeinspritzung nur bei jeder vierten, fünften usw. Motorumdrehung erfolgen.

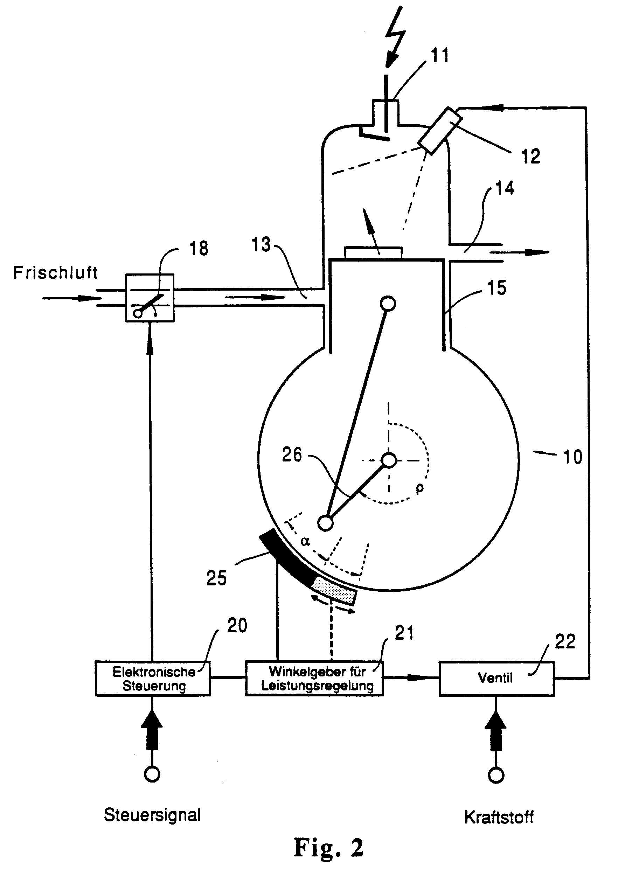

In der Darstellung gemäß Fig. 2 ist schematisch ein Zweitakt-Verbrennungsmotor 10 dargestellt. Die Zündkerze 11 zündet bei jeder Umdrehung des Motors. Am Zylinderkopf ist eine Einspritzdüse 12 angebracht, welche den Kraftstoff periodisch, und zwar in gleichen Zeitabständen intermittierend wahlweise bei jeder einzelnen, jeder zweiten, jeder dritten, jeder vierten usw. Umdrehung in den Zylinderraum einspritzt. Diese Einspritzung erfolgt knapp nach dem Schließen des Einlaßkanals 13 und des Auslaßkanals 14, und zwar kurz bevor der Kolben 15 den oberen Totpunkt erreicht sowie vor dem Zündzeitpunkt. In der zum Einlaßkanal 13 verlaufenden Frischluftleitung ist ein Drosselorgan mit einer Drosselklappe 18 vorgesehen. Dieses Drosselorgan steht mit einer elektronischen Steuerung 20 in Verbindung, die mit einem Steuersignal beaufschlagt wird, das zur Steuerung des Motors im Betrieb dient. Die elektronische Steuerung steht mit einem Winkelgeber für die Leistungsregelung 21 in Verbindung, der seinerseits auf ein Ventil 22 der Kraftstoffeinspritzung wirkt. Dieses Ventil 22 ist unmittelbar mit der Einspritzdüse 12 verbunden und führt der Einspritzdüse den Kraftstoff in einem konstanten Volumenstrom unter hohem Druck, z. B. mit einem Druck von 30 bar oder mehr zu.

Der Winkelgeber für die Leistungsregelung 21 umfaßt einer oder mehrere Sensoren 25, die der Kurbelwelle 26 des Motors zugeordnet sind und pro Umdrehung einen vorgegebenen Drehwinkel $\alpha$ erfassen. Während dieses Drehwinkels wird das Ventil 22 angesteuert und für die Kraftstoffzufuhr zur Einspritzdüse 12 geöffnet. Da der Kraftstoff mit einem konstanten Volumenstrom zugeführt wird, löst dies bei gleichbleibender Drehzahl während des Drehwinkels $\alpha$ (nachfolgend als auch Öffnungswinkel $\alpha$ bezeichnet) die Einspritzung einer gleichbleibenden Kraftstoffmenge aus. Wenn sich - insbesondere beim Leerlauf oder beim Schubbetrieb - die Drehzahl ändert, d. h. die Drehzahl wegdriftet, verändert sich auch die Zeit, während welcher der Drehwinkel $\alpha$ durchlaufen wird, und zwar umgekehrt proportional zur Drehzahl. Daraus ergibt sich eine Selbstregelung für die Drehzahl, indem nämlich bei einem Ansteigen der Drehzahl die Menge des eingespritzten Kraftstoffes zurückgeht bzw. sich bei einem Abfallen der Drehzahl die Zeitdauer der Krattstoffeinspritzung verlängert und somit die Menge des mit konstantem Volumenstrom eingespritzten Kraftstoffes zunimmt.

Um gemäß der Erfindung eine sichere Zündung mit einem möglichst mageren Gemisch zu gewährleisten, wird gleichzeitig mit dem Übergang in den Leerlauf- bzw. Teillastbetrieb über die elektrische Steuerung 20 die Drosselklappe 18 geöffnet. Dies bewirkt eine reichliche Frischluftzufuhr während der intermittierenden Kraftstoffeinspritzung. Durch die größere eingespülte Frischluftmenge wird eine sichere Zündung gewährleistet. Es kann aber außerdem auch häufiger in kleineren Mengen eingespritzt werden, was trotz der intermittierenden Einspritzung dazu führt, daß der Motor einen sehe glatten Rundlauf erhält.

Zur Verringerung der Einspritzmenge ist deshalb vorgesehen, daß die Sensoren 25, mit welchen der Drehwinkel bzw. Öffnungswinkel $\alpha$ abgetastet wird, eine Winkelverstellung zulassen. Diese Winkelverstellung kann auch für eine Leistungsregelung im Teillastbetrieb bei geöffneter Drosselklappe verwendet werden. Durch das reichliche Angebot an Frischluft wird gewährleistet, daß sich eine Ladungsschichtung einstellt, bei der sich immer ein zündfähiges Gemisch in Kerzennähe zum Zeitpunkt der Zündung und je nach Lastzustand auch ein mehr oder weniger großer Anteil reiner Luft im kerzenfernen Bereich ansammelt. Durch diese Maßnahme wird auch im Leerlauf- bzw. Teillastzustand eine Regelung des Lastzustandes durch die Einspritzmenge allein möglich, wobei immer reichlich Frischluft vorhanden ist, um in dem Teillastbereich eine magere Verbrennung sicherzustellen, woraus sich die besonders günstigen Abgaswerte und Verbrauchswerte für einen nach dem Verfahren der Erfindung betriebenen Zweitakt-Verbrennungsmotor ergeben.

## Patentansprüche

1. Verfahren zum Betreiben eines Zweitakt-Verbrennungsmotors mit einer elektronisch gesteuerten direkten Kraftstoffeinspritzung in den Zylinder, wobei die Kraftstoffeinspritzung im Leerlauf und niedrigen Teillastbereich intermittierend erfolgt,
**dadurch gekennzeichnet,**
– daß die elektronische Steuerung für die intermittierende Betätigung der Einspritzdüse zusätzlich die Drosselklappe zur Einspülung einer größeren Frischluftmenge über den Leerlauf- bzw. Teillastzustand hinaus öffnet,
– und daß der Kraftstoff während eines lastabhängigen, aber dennoch für eine bestimmte Last gleichbleibenden Öffnungswinkels mit konstantem Volumenstrom eingespritzt wird.

2. Verfahren nach Anspruch 1,
**dadurch gekennzeichnet,**
– daß die Drosselklappe im Leerlauf- bzw. Teillastzustand ganz geöffnet wird.

3. Verfahren nach Anpsruch 1 oder 2,
**dadurch gekennzeichnet,**
– daß die Einspritzung des Kraftstoffs während eines gleichbleibenden Öffnungswinkels mit einem auf die Kurbelwellenstellung ansprechenden Winkelgeber gesteuert wird.

4. Verfahren nach einem der Ansprüche 1 bis 3,
**dadurch gekennzeichnet,**
– daß zur Einstellung einer gewünschten Leistung der Öffnungswinkel geändert wird.

5. Verfahren nach einem der Ansprüche 1 bis 4,
**dadurch gekennzeichnet,**
– daß der Einspritzdruck etwa 30 bar oder mehr beträgt.

6. Verfahren nach einem mehreren der vorausgehenden Ansprüche,
**dadurch gekennzeichnet,**
– daß die elektronisch gesteuerte Kraftstoffeinspritzung mit einer jeweiligen Einspritzdauer in der Größenordnung von 1 ms erfolgt.

7. Verfahren nach einem der vorausgehenden Ansprüche,
**dadurch gekennzeichnet,**
– daß bei einem Mehrzylinder-Motor die Kraftstoffeinspritzung für die einzelnen Zylinder sequentiell und periodisch in gleichen Zeitabständen erfolgt.

## Claims

1. Process for operating a two-stroke combustion engine with an electronically controlled direct fuel injection into the cylinder, wherein the fuel injection in the no-load and the lower underload mode is performed intermittently,
**characterized in that**
– the electronic control for the intermittent operation of the injection nozzle additionally opens the throttle beyond the no-load or underload condition in order to supply a larger amount of fresh air,

– and the fuel is injected during a load-depending, but for a certain load constant opening angle with a constant fuel volume flow.

2. Process according to claim 1,
**chararacterized in that**
– the throttle is completely opened in the no-load or the underload mode.

3. Process according to claim 1 or 2,
**characterized in that**
– the injection of the fuel during a constant opening angle is controlled by an angle indicator responsive to the crankshaft position.

4. Process according to one of the claims 1 to 3,
**characterized in that**
– for adjusting a desired capacity the opening angle is changed.

5. Process according to one of the claims 1 to 4,
**characterized in that**
– the injection pressure amounts to approximately 30 bar or more.

6. Process according to one of the preceding claims,
**characterized in that**
– the electronically controlled fuel injection is performed with a duration of each injection in the order of 1 ms.

7. Process according to one of the preceding claims,
**characterized in that**
– in an engine having multiple cylinders the fuel injection for the individual cylinders is performed sequentially and periodically in equal time intervals.


**Revendications**

1. Procédé pour faire marcher un moteur à combustion interne à deux temps comportant une injection de carburant directe à commande électronique dans le cylindre, l'injection de carburant au ralenti et dans la plage inférieure de charge partielle étant intermittente,
**caractérisé en ce que**
– la commande électronique pour l'actionnement intermittent de l'injecteur ouvre en plus le papillon pour admettre une quantité d'air frais supérieure au-delà de l'état de ralenti ou de charge partielle,
– et que le carburant est injecté à volume constant pendant un angle d'ouverture asservi à la charge mais restant malgré tout identique pour une charge déterminée.

2. Procédé selon la revendication 1,
**caractérisé en que**
– le papillon est entièrement ouvert à l'état de ralenti ou de charge partielle.

3. Procédé selon les revendications 1 ou 2,
**caractérisé en ce que**
– l'injection du carburant est commandée pendant que l'angle d'ouverture reste identique moyennant un capteur d'angle réagissant à la position du vilebrequin.

4. Procédé selon l'une des revendications 1 à 3,
**caractérisé en ce que,**
– pour le réglage d'une puissance déterminée, l'angle d'ouverture est modifié.

5. Procédé selon l'une des revendications 1 à 4,
**caractérisé en ce que**
– la pression d'injection est environ de 30 bar ou plus.

6. Procédé selon l'une ou plusieurs des revendications précédentes,
**caractérisé en ce que**
– l'injection de carburant à commande électronique se fait avec une durée d'injection de l'ordre de 1 ms.

7. Procédé selon l'une des revendications précédentes,
**caractérisé en ce que**
– l'injection de carburant est séquentielle et périodique à intervalles identiques dans les différents cylindres lorsque le moteur comporte plusieurs cylindres.

normal

jedes
2.Mal

jedes
3.Mal

usw.

| | 1. | 2. | 3. | 4. | 5. | 6. | [Umdr.] |
| 0° | 360° | 720° | 1080° | 1440° | 1800° | 2160° | [ρ] |

[Einspritzung]

[Zündung]

Normale und intermittierende Direkteinspritzung
am Zweitakt-Verbrennungsmotor

**Fig. 1**

EP 0 409 859 B1

**Fig. 2**

Frischluft

Steuersignal

Kraftstoff

Elektronische
Steuerung

Winkelgeber für
Leistungsregelung

Ventil